# EUROPEAN PATENT APPLICATION

(11) **EP 3 742 366 A1**
(43) Date of publication of application: **25.11.2020**
(21) Application number: 19382397.8
(22) Date of filing: 20.05.2019
(51) Int. Cl.: G06Q 10/08

(54) **METHOD AND SYSTEM FOR ASSISTING IN THE MANAGEMENT OF LIVESTOCK**

(71) Applicant: Touchless Animal Metrics, SL, 08010 Barcelona (ES)
(72) Inventor: AMAT ROLDAN, Ivan, 08024 Barcelona (ES)
(74) Representative: Juncosa Miró, Jaime

(57) **Abstract**

A method and system for assisting in the management of livestock are disclosed. The method comprises receiving, by a computing system, information related to a livestock animal and obtaining using the received information at least one feature of the livestock animal; and displaying, by a light-based signaling device operatively connected to the computing system and located at a certain distance from the livestock animal, an identifier relating to the obtained feature on a part of or in an area nearby the livestock animal or in at least one screen, wherein said certain distance is comprised within a given signaling range, so that said identifier being indicative or instructing how the at least one livestock animal has to be classified within a group of livestock animals in a touchless manner, or showing that a further action might have to be taken by an operator.

## Description

### Technical Field

The present invention is directed, in general, to the field of automated management methods and systems. In particular, the invention relates to a method, and to a system, for assisting in the management of livestock from a distance by signaling. The signaling includes the identification with light or by projecting images in a specific arrangement near or on the livestock animal related to any aspect/feature, including weight, health, identification code, age, body temperature, body sizes and posture, among others.

### Background of the Invention

Identification of animals is an important task in livestock management that requires intensive efforts. For example, identification of animals at the right weight for finalization, identification of animals that are growing at normal or abnormal rates, identification of animal with illness, etc. These tasks are at the present time done manually.

Currently, animals are weighted one or two days before sending them to the abattoir and marked with spray. Spray only lasts few days, and in general, it is a problem to recognize the spray marks after two days. Beyond the persistence of spray or any other ink, this approach presents problems in terms of biosafety as the potential toxicity or effects on the animal or the meat. Moreover, the physical interaction between the animal and the operator provokes stress to the animal and in some cases danger for the operator.

Some patents or patent applications are known in the field, for example EP-A1-3173751 discloses a system incorporating a dynamic weighing platform which indicates the weight value obtained. The system also comprises a control device, a detection system and a marking device. The dynamic weighing platform is foldable and portable. The control device comprises an interface for a user to interact with the system, with a data processor connected to the dynamic weighing platform. The detection system comprises at least two detection devices with photocells connected to the control device. The marking device comprises at least two actuators, to activate the corresponding two marking elements, connected to the control device. The marking device also incorporates sprays of different colors.

WO-A1-2016135684 relates to a method for calculating the body condition score - BCS, the weight of an animal and its state of fertility by means of the mathematical processing of some characteristic morphological traits of the observed subject, which makes use of at least one contact or no-contact detection device of a profile of the animal, at least a data processing unit and a program that implements a specific mathematical method of interpretation. In order to highlight a specific anatomical region of the observed subject, so that it can be detected by means of a video recording apparatus, a structured light source can be used. Assuming that the pattern consists of one or more rows transverse to the spine of the observed subject in a specific anatomical region, it is possible to project a pattern (e.g. shaped light) on the body of the subject under examination, in the anatomical region of interest. In this case, an apparatus will include a coherent (e.g. a laser line generator) or not coherent light source, this light source projecting on the subject a set of discrete or continuous points, in order to highlight the profile on the morphological interest region.

More solutions are needed for remotely assisting in the management of livestock for example for touchless signaling the livestock animals, while the animals are freely moving in a farm or in its natural environment.

### Description of the Invention

Present invention proposes, according to a first aspect, a method for assisting in the management of livestock, in a touchless manner (i.e. remotely).

The method comprises receiving, by a computing system, information related to a livestock animal such as a pig, a bull, a cow, a sheep, a broiler, a duck or a chicken, among others, while the animal freely moves in a farm or in its natural environment, and obtaining one or more features of the livestock animal using the received information; and displaying, by a light-based signaling device operatively connected to the computing system and located at a certain distance, within a signaling range, from the livestock animal, an identifier relating to the obtained feature on a part of the livestock animal, in an area nearby the livestock animal, or in at least one screen (for example, of an optical head-mounted display such as the Google glasses™).

Thus, the identifier is indicative or instructs how the livestock animal has to be classified/sorted within a group of livestock animals in a touchless manner, or the identifier shows that a further action might have to be taken, for example by a farm operator.

In this manner, present invention substitutes previous marking strategies using sprays or other physical marking approaches, reducing the physical interaction between the livestock animal and operator in a way stress of the animal is reduced as well as operator has lower chances to be injured.

It should be noted that the method is applicable to the signaling of any object.

According to the proposed method, the received information can comprise any of a two-dimensional image of the livestock animal, a three-dimensional point cloud image of the livestock animal or a depth profile of the livestock animal (e.g. a number of spatial relationships or a graph in which different information of the animal is related), and the distance between the livestock animal and the acquisition system used for acquiring the two-dimensional image or the position or coordinates of the livestock animal.

In an embodiment, said one or more features is/are obtained by implementing, by a processing unit of the computing system, a characterization algorithm that uses the received information and an a priori model of the livestock animal. The a priori model preferably includes indicators linking different parts, contours or shapes representative of the livestock animal or indicators about psychological conditions of the livestock animal. Alternatively, in another embodiment, the one or more features is/are obtained by the computing system matching the received information with information stored in a memory or database.

According to the proposed method, the one or more features can include a body parameter of the livestock animal such as the weight, the temperature, the body size and/or the age; and/or a condition of the livestock animal, for example if the animal is sick, unhealthy, if needs to be moved to another pen of the farm, or if the animal is identified as aggressive; and/or coordinates, position or posture of the animal.

In an embodiment, the identifier comprises a text message showing the computed feature(s). Alternatively, in another embodiment, the identifier comprises a symbol including a color mark. For example, if the symbol displayed is green it can mean that a further action has to be taken by the operator, for example the animal has to be taken to the abattoir, whereas if the symbol displayed is red it can mean that the animal does not meet the required weight.

The part of the livestock animal or said area can be calculated by the computing system based on the type of livestock animal to be signaled. That is, the computing system by implementing an algorithm can decide where to display the identifier. For example, the computing system can decide to display the identifier on a specific body part of a pig or in an area/zone nearby a cow or a broiler, or another livestock.

In an embodiment, the received information comprises a two-dimensional image including a plurality of livestock animals, and a value of the distance between the livestock animals and the acquisition system used for acquiring said image or the position or coordinates of the livestock animals. In this case, a processing unit of the computing system can identify each one of the livestock animals included in the two-dimensional image by implementing a segmentation algorithm and decide which one of the livestock animals have to be signaled by implementing a decision algorithm.

Present invention also proposes, according to a second aspect, a system for assisting in the management of livestock comprising a computing unit having one or more processing units configured to receive information related to at least one livestock animal and to obtain at least one feature of the livestock animal using the received information. The system also comprises a light-based signaling device operatively connected to the computing system, located at a certain distance from the livestock animal, and configured to display an identifier relating to the obtained feature on a part of or in an area nearby the livestock animal or in at least one screen, wherein said certain distance is comprised within a given signaling range, so that said identifier being indicative or instructing how the at least one livestock animal has to be classified within a group of livestock animals in a touchless manner, or showing that a further action might have to be taken by an operator.

According to the proposed system, the computing system and the light-based signaling device can be arranged in a hand-held device, in an unmanned aerial vehicle or in an optical head-mounted display. Alternatively, the computing system and the light-based signaling device can be arranged in a device mounted in a fix position in the farm or mounted in a movable structure in the farm.

In an embodiment, the system also includes an image acquisition unit to acquire (one or more) two-dimensional image(s) of the livestock animal(s). The image acquisition unit such as a camera can be installed in a particular area of the farm, configured to be oriented towards the different pens, or can be integrated in said hand-held device, in the unmanned aerial vehicle or in the optical head-mounted display.

In another embodiment, the system includes a series of image acquisition units to acquire (one or more) two-dimensional image(s) of the livestock animal(s). In this case, the series of image acquisition units can be positioned in different areas in the farm or in the different pens, such that each image acquisition unit has its field of view oriented towards a different pen.

According to the proposed system, the light-based signaling device can comprise a coherent or not coherent light source such as a laser, a spatial light modulator, a LCD, a lamp, etc. Moreover, the light-based signaling device may also include a beam shaping device/unit such as a hologram, a spatial light modulator, a deformable mirror, a galvanometric mirror, a spinning disk, a diffractive optical element, a phase mask, a prism, or even an electro-optical effect to display the identifier from a coherent light source.

### Brief Description of the Drawings

The previous and other advantages and features will be more fully understood from the following detailed description of embodiments, with reference to the attached figures, which must be considered in an illustrative and non-limiting manner, in which:

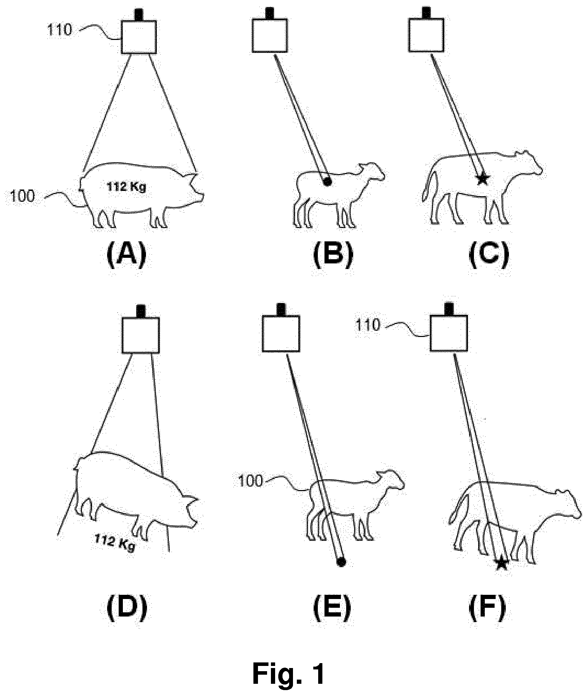

Fig.1 shows some examples of how the identifier can be displayed according to different embodiments of the present invention. (A) animal weight is projected on top of the skin of a pig; (B) a laser beam signals a sheep, tilting can be obtained for example by a pair of galvanometric mirrors; (C) a star is projected on top of the skin of a cow with a shaped laser beam obtained for example by means of a laser beam and a phase plate or hologram; (D) the same of (A) but projected near the livestock animal; (E) the same of (B) but projected near the livestock animal; and (F) the same of (C) but projected near the livestock animal.
Fig. 2 illustrates different examples of the features that can be obtained and displayed by the present invention. (A) shows a situation in which a sick pig 100 is signaled; (B) a pig that needs to be moved to another pen; and (C) a pig that has been detected as aggressive.
Fig. 3 shows an example of an unmanned vehicle including the proposed system. (A) Pig with its weight displayed or projected nearby it; (B) Sheep with a laser beam; and (C) Cow with a shaped laser beam displayed/project on it.
Fig. 4A shows an example of the proposed device mounted on a static position for each pen in a farm. Fig. 4B shows an example of the proposed device mounted on a rail which can be moved through different pens in the farm.
Fig. 5A illustrates an example of the proposed device for assisting in the management of livestock mounted on a rail and a network of cameras that track animals of each pen.
Fig. 5B illustrates an example of the proposed device mounted on a rail and integrating a pig weighing device based on image analysis and a network of cameras that track animals individually.
Fig. 6 illustrates an embodiment in which the displaying of the identifier is made via augmented reality images in an optical head-mounted display.
Fig. 7 illustrates an embodiment in which the displaying of the identifier is made via a screen of a tablet or smartphone.
Fig. 8 graphically illustrates an embodiment of the method for assisting in the management of livestock.
Fig. 9 graphically depicts an embodiment in which multiple livestock animals are signaled at the same time. In Fig. 9A only a label identifying the different animals is displayed whereas in Fig. 9B the weight of each animal is displayed on each animal.
Fig.10 shows an embodiment of the proposed device that can be mounted in a fix position or in a movable structure in a farm.
Fig. 11 shows another embodiment of the proposed device.

### Detailed Description of the Invention and of Preferred Embodiments

Present invention provides a touchless marking/signaling approach via a light-based solution for assisting in the management of livestock. In this manner, present invention by proposing a method and corresponding system (sometimes implemented as a device or apparatus) substitutes the use of spray or any other physical marking/signaling strategies.

According to the present invention the livestock animal 100 (or living specimen) can comprise a pig, a bull, a cow, a sheep, a broiler, a duck, a chicken, etc. Nonetheless, it should be noted that the invention is applicable to the signaling of any object in motion.

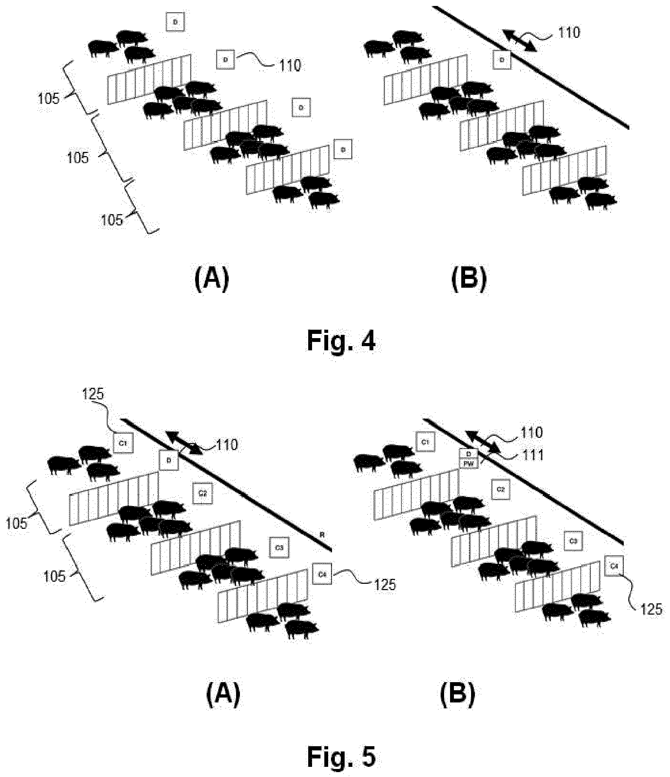

In an embodiment, present invention provides a device 110 comprising a computing unit 111 with one or more processing units to receive information related to the livestock animal 100 in the range of signaling (from a few meters to hundreds of meters). The received information can include one or more two-dimensional image(s), a three-dimensional point cloud image, or a depth profile of the livestock animal 100 and a value of the distance between the livestock animal 100 and an acquisition system 125 (for example a camera), see Fig. 5, used for acquiring said two-dimensional image or the position or coordinates of the livestock animal 100. With the received information the computing unit 111 obtains a feature (it can obtain more than one) of the livestock animal 100. The information can be received either directly from the camera(s) 125, from a cloud computing server, or from a handheld device for automated parameters calculation of livestock animals such as the one taught by WO-A1-2015193711 of the same inventors of present invention.

The device 110 also includes a light-based signaling device 112 such as a coherent or not coherent light source, preferably a laser, operatively connected to the computing system 111 and located at a certain distance from the livestock animal 100, to display an identifier relating to said obtained feature on or nearby the livestock animal 100. Additionally, the light-based signaling device 112 may also include additional beam shaping devices/units such as holograms, spatial light modulators, deformable mirrors, galvanometric mirrors, spinning disks, etc. to display said identifier.

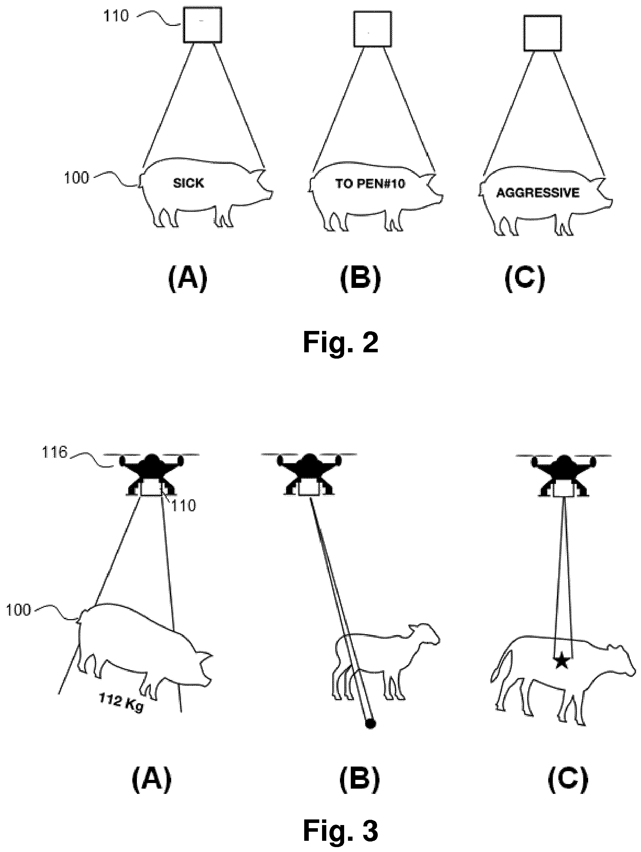

The obtained feature may include a body parameter such as the weight, temperature, body size, age, etc. of the livestock animal 100. However, because not only a body parameter can be informative when managing livestock, as shown in Fig. 2, other features can also be obtained and displayed by present invention. For example, a condition of the livestock animal 100 such as if the animal is sick, unhealthy, if needs to be moved to another pen 105 of the farm or if the animal is identified as aggressive. This saves a lot of time and efforts in identifying the right livestock animal 100 and minimizes the interaction with the livestock animal 100.

With reference to Fig. 3 therein it is illustrated another embodiment of the present invention. In this particular case the proposed device 110 is arranged in an unmanned aerial vehicle 116 such as a drone. Alternatively, the computing system and the light-based signaling device can be integrated in a handheld device (not shown), such as the device taught by WO 2015193711. Even, the device 110 can be mounted in a fix (see Fig. 4A) or in a movable structure (see Fig. 4B) of the farm.

The unmanned aerial vehicle 116 might be further complemented by a positioning system, for example a GPS in a form of a collar for a specific livestock animal 100 (like Iberian pig or fighting bull) that is localized by the computing system and the unmanned aerial vehicle 116 goes to find the livestock animals 100 fulfilling some condition. For example, when the computing system knows that there are 50 Iberian pigs with the right weight for the abattoir sends (for example via a communication unit thereof) a warning to the farmer, and proposes a route to the farmer. The farmer follows these instructions and loads the right pigs. In case of having many animals together, the unmanned aerial vehicle 116 will further signal the individual animal.

Device 110 of Figs. 4A and 4B can be integrated or complemented with different systems. For example, a weighting system based on image analysis such as the device taught by WO 2015193711 and/or a number of cameras 125 that perform animal surveillance, which compute for example, tracking for analysis of motion to estimate health status or identify a specific livestock animal 100 that has been continuously tracked, as shown in Fig. 5.

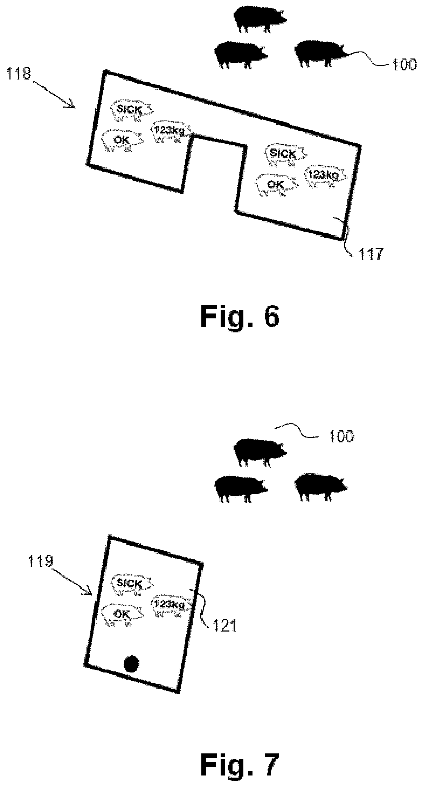

With reference now to Fig. 6, therein it is illustrated another embodiment of the present invention in which the displaying of the identifier relating to the obtained feature(s) is made via augmented reality images in the screens 117 of an optical head-mounted display 118 such as the Google glasses™. Fig. 7 shows a screen 121 of a tablet or smartphone 119 showing the real image of the livestock animal(s) 100 with the enriched information. In these two embodiments, the computing unit may have integrated therein an APP or software application executing an algorithm to obtain the one or more features of the livestock animal 100 based on the received information.

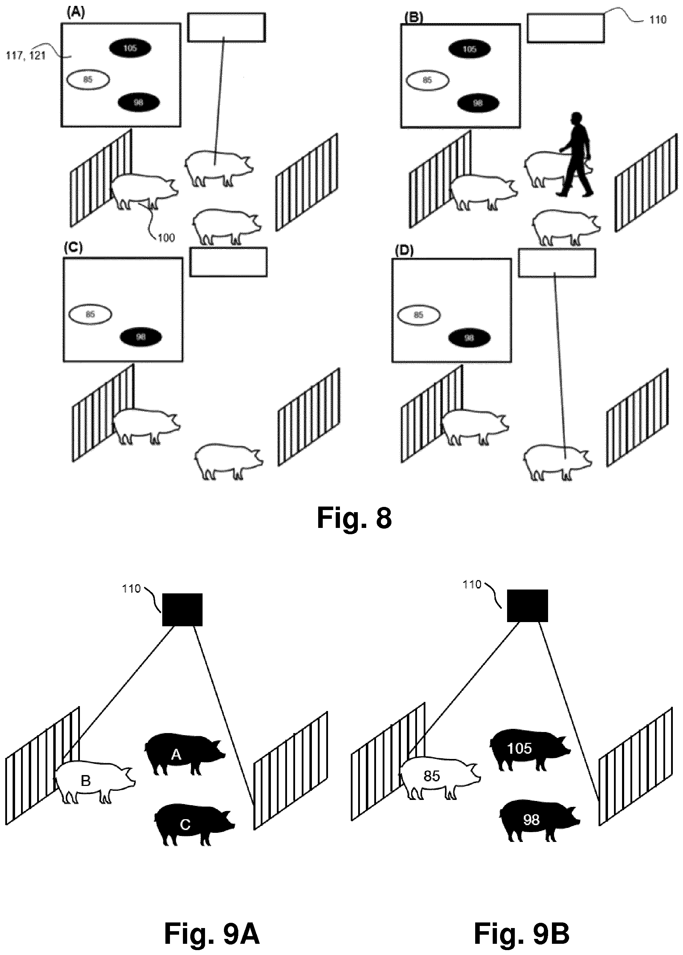

Fig. 8 graphically depicts an embodiment of the method for assisting in the management of livestock. In this case, once the device 110 has received the information related to the livestock animals 100, has identified the latter, decided which one has to be signaled and obtained the one or more features, the device 110 (see Fig. 8A) via the light-based signaling device points a first livestock animal 100 and displays the identifier related to the obtained feature(s). A technician/operator of the farm can then approach the signaled livestock animal 100 (see Fig. 8B). Once the signaled livestock animal has been moved (Fig. 8C), for example to the abattoir, the device 110 can point a next livestock animal 100 (Fig. 8D).

Fig. 9 shows an embodiment in which different livestock animals 100 can be signaled at the same time.

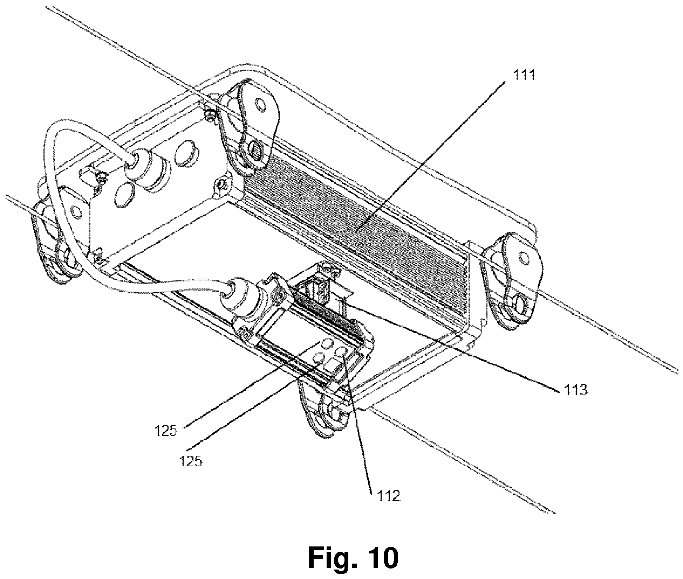

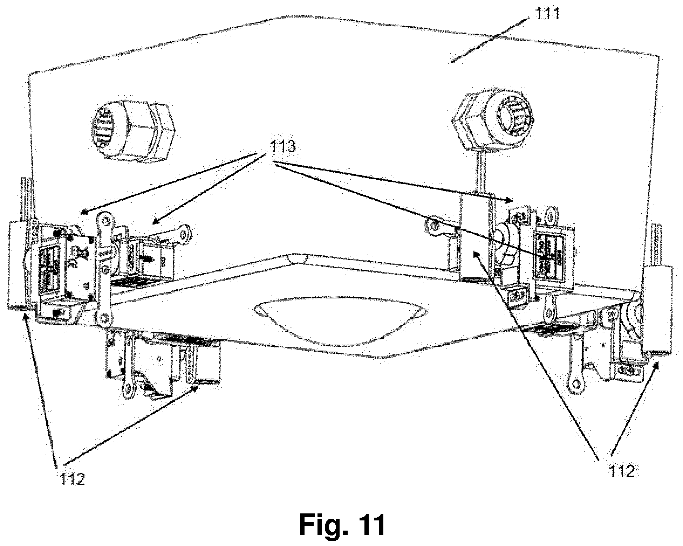

Figs. 10 and 11 show other embodiments of the proposed device. In Fig. 10, the device 110 comprises two cameras 125, a computing unit 111 (enclosed within an enclosure) to process the acquired image(s), a laser pointer 112 and a pair of servo motors 113. Laser pointer 112 can also be changed by a projector. In Fig. 11, the device 110 comprises four laser pointers 112 and four pairs of servo motors thus up to four different animals can be signaled with the same device 110. The laser pointers 112 can also be integrated with a shaping device.

Other embodiments containing projectors or light shaping devices can be also provided to display complex patterns for one or multiple livestock animals 100. Pulsed light and fast moving motors, or by means of refraction, reflection, dispersion, deflection or diffraction of light (by means of SLMs, non-linear optical or electro-optical effects) can be designed also to point multiple targets or display complex patterns with a single device. Also, LED or laser arrays (e.g. vertical-cavity surface emitting lasers, VECSELs) can be engineered to generate light patterns that can be electronically controlled.

The proposed invention may be implemented in hardware, software, firmware, or any combination thereof. If implemented in software, the functions may be stored on or encoded as one or more instructions or code on a computer-readable medium.

The scope of the present invention is defined in the following set of claims.

## Claims

1. A method for assisting in the management of livestock, the method comprising:
receiving, by a computing system, information related to a livestock animal and obtaining using the received information at least one feature of the livestock animal; and
displaying, by a light-based signaling device operatively connected to the computing system and located at a certain distance from the livestock animal, an identifier relating to the obtained feature on a part of or in an area nearby the livestock animal or in at least one screen, wherein said certain distance is comprised within a given signaling range,
so that said identifier being indicative or instructing how the at least one livestock animal has to be classified within a group of livestock animals in a touchless manner, or showing that a further action might have to be taken by an operator.

2. The method of claim 1, wherein the received information comprises:
a two-dimensional image or a three-dimensional point cloud image or a depth profile of the livestock animal; and
a value of the distance between the livestock animal and an acquisition system used for acquiring said image or a position or coordinates of the livestock animal.

3. The method of claim 2, wherein said at least one feature is obtained by implementing, by a processing unit of the computing system, a characterization algorithm that uses the received information and an a priori model of the livestock animal, said a priori model including indicators linking different parts, contours or shapes representative of the livestock animal or indicators about psychological/health/behavior conditions of the livestock animal.

4. The method of claim 1, wherein the identifier comprises a text message showing the computed feature or a symbol including a color mark.

5. The method of claim 1, wherein said part of the livestock animal or said area is calculated by the computing system based on the type of livestock animal to be signaled.

6. The method of claim 1, wherein the received information comprises at least one two-dimensional image including a plurality of livestock animals and a value of the distance between the livestock animals and an acquisition system used for acquiring said image or the position or coordinates of the livestock animals, and the method further comprises identifying, by a processing unit of the computing system, each one of the livestock animals included in the image by implementing a segmentation algorithm and deciding which one of the livestock animals have to be signaled by implementing a decision algorithm.

7. The method of claim 1, wherein said light-based signaling device comprises a coherent or not coherent light source including a laser, a spatial light modulator, a LCD or a lamp.

8. The method of claim 1, wherein the obtained feature includes:
a body parameter of the livestock animal including the weight, the temperature, the body size and/or the age; and/or
a condition of the livestock animal including if the animal is sick, unhealthy, if needs to be moved to another pen of a farm or if the animal is identified as aggressive.

9. The method of any one of previous claims, wherein the livestock animal includes a pig, a bull, a cow, a sheep, a broiler, a duck, or a chicken.

10. A system for assisting in the management of livestock, the system comprising:
a computing unit (111) having one or more processing units configured to receive information related to at least one livestock animal (100) and to obtain at least one feature of the livestock animal (100) using the received information; and
a light-based signaling device (112) operatively connected to the computing system (111), located at a certain distance from the livestock animal (100), and configured to display an identifier relating to the obtained feature on a part of or in an area nearby the livestock animal (100) or in at least one screen, wherein said certain distance is comprised within a given signaling range,
so that said identifier being indicative or instructing how the at least one livestock animal (100) has to be classified within a group of livestock animals (100) in a touchless manner, or showing that a further action might have to be taken by an operator.

11. The system of claim 10, wherein the computing unit (111) and the light-based signaling device (112) are arranged in a hand-held device, in an unmanned aerial vehicle (116) or in an optical head-mounted display (118).

12. The system of claim 10, wherein the computing unit (111) and the light-based signaling device (112) are arranged in a device (110) mounted in a fix position in a farm or mounted in a movable structure in the farm.

13. The system of claim 11, further comprising an image acquisition unit configured to acquire at least one two-dimensional image of the livestock animal(s) (100).

14. The system of claim 12, further comprising one or more image acquisition units (125) configured to acquire at least one two-dimensional image of the livestock animal(s) (100), wherein in case the system comprising more than one image acquisition unit (125), the image acquisition units (125) being positioned at different areas in the farm, the latter including different pens (105), and each image acquisition unit (125) having a field of view oriented towards a different pen (105).

15. The system of claim 10, 12 or 14, wherein the light-based signaling device (112) comprises a coherent or not coherent light source including a laser, a spatial light modulator, a LCD or a lamp.
